Europäisches Patentamt

European Patent Office

Office européen des brevets

(19)

Publication number: **0 274 751**
**A2**

## (12) EUROPEAN PATENT APPLICATION

(21) Application number: **87119355.3**

(22) Date of filing: **30.12.87**

(51) Int. Cl.⁴ **B65G 23/36**

(30) Priority: **09.01.87 IT 2044187 U**

(43) Date of publication of application:
**20.07.88 Bulletin 88/29**

(84) Designated Contracting States:
**DE FR GB**

(71) Applicant: **TECNO POOL S.p.A.**
**Via L. Da Vinci**
**I-35010 Marsango Padova(IT)**

(72) Inventor: **Pessa, Luciano**
**Via Vicenza No.25/B**
**I-35042 Este Padova(IT)**

(74) Representative: **Petruzzelli, Antonio**
**Via E. De Amicis No. 25**
**I-20123 Milan(IT)**

(54) Drive unit for chain conveyors comprising link accumulating device.

(57) A drive unit for endless chain conveyors comprising a first and a second side chains having links (26, 27) connected by cross bars (25) defining the conveying surface of the conveyor, and in which each chain comprises main link members (26) arranged in planes that are orthogonal to the conveying surface, and intermediate links (27) which are interconnected to the former and are arranged parallely to said conveying surface, and. sprocket wheels (18a, 18b) connected to a control motor (20) for advancing or drawing the chains. Each drive unit (17) comprises link accumulating means (28) provided with guide tracks (31, 32) for the slackened link (26, 27) of the chains.

Fig. 4

EP 0 274 751 A2

## Drive unit for chain conveyors comprising link accumulating device

The present invention relates to a dirve unit for chain conveyor belts of the type comprising a first and a second link chain parally arranged which are moved along a path, in which the single annular links of a chain are alternately arranged in orthogonal planes and are connected to the corresponding links of the other chain by means of cross bars which constitute the conveying surface of the conveyor.

In the conveyors of the above-mentioned type, the chain belt moves along a pre-established path which, in general, is comprised of straight sections and/or curved sections, according to the multiple uses and the various transport necessities of the goods to be conveyed. The chains of the conveyor belt generally slide along lateral guides or tracks and are moved by means of sprocket wheels of suitable drive units spaced apart at pre-established distances. In the conveyors in which the return branch of the belt moves along a path that is separate from the active branch or the one for conveying the goods, there exists the problem of compensating for eventual slackenings in one or both of the chains, caused by various factors, both constructional and functional, of the conveyor itself; of particular importance are the variations in tension or stretching of the chains, which may occur along the whole belt or in limited sections of the conveyor, as a consequence of possible variations in the dimensioning tolerances of the single links of the chain, or as a result of wear of the chains themselves and/or of the guiding tracks in the circular sections or in the curves of the path, which determine variations in the length of the chains as compared with the length of their path along the slide tracks.

To avoid such difficulties, one generally makes use of special idlers located in correspondence with deviations in the path of the chains, at pre-established points in the conveyor, thus creating a discontinuity in the conveying surface. The use of idlers, and of deviations in the path of the chains along the conveyor, not only makes the construction of the conveyor more complex and more expensive, but also creates additional dimensions, particularly in conveyors with superimposed planes, because of the greater distance that must necessarily be maintained between each conveying plane and the one underneath.

Taking into account the above-mentioned considerations and the fact that problems of slackening of the chains caused by wear of the chains and the guides make their appearance in comparatively long periods of time so that, in general, frequent maintenance interventions or in very limited times are not required, according to the present invention to avoid the above-mentioned inconvenience it has been devised to eliminate the use of idlers and deviations of the chain paths in order to compensate for slackening of the chains for the time being, by providing opportune link accumulating means for accumulating some of the slackened links of the chain along lateral guides and at the ends of the drive units. According to the present invention, the above-mentioned link accumulating means comprises a link accumulating guide channel for containing slackened links, on each side and, at least, at one end of the drive unit, in which the links can run freely, even in a slightly slackened condition, the links of the chain being pushed forward by the sprocket wheels of the same drive unit; the combined action of the cross bars welded at the inner side of the links of the two chains, which therefore impede any relative movement in a cross sense, together with the accumulating channels for the links, ensures a correct guiding of the chains and the stability of the surface of the conveyor, because the slackened links of the two chains run and are guided along appropriate running tracks immediately following or at the exit from the drive units.

A drive unit provided with a means for compensating the tension of the chains, through accumulation of the slackened links of the chains, will be illustrated here below with reference to the attached drawings, in which :

Fig. 1 - is a view of the layout plan of a generic chain conveyor, porvided with a drive unit according to the present invention;

Fig. 2 - is a schematic top view of a drive unit;

Fig. 3 - is a side view of the drive unit, according to the line 3 -3 of Figure 2;

Fig. 4 - is a detailed, enlarged view of Figure 3;

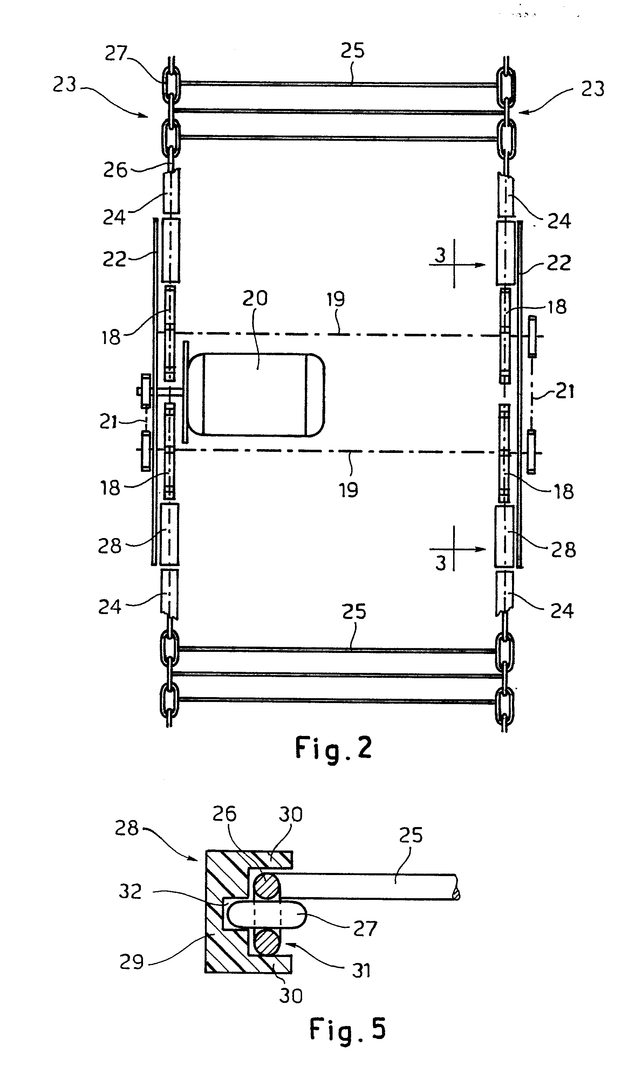

Fig. 5 - is a cross section according to the line 5 - 5 of Figure 4.

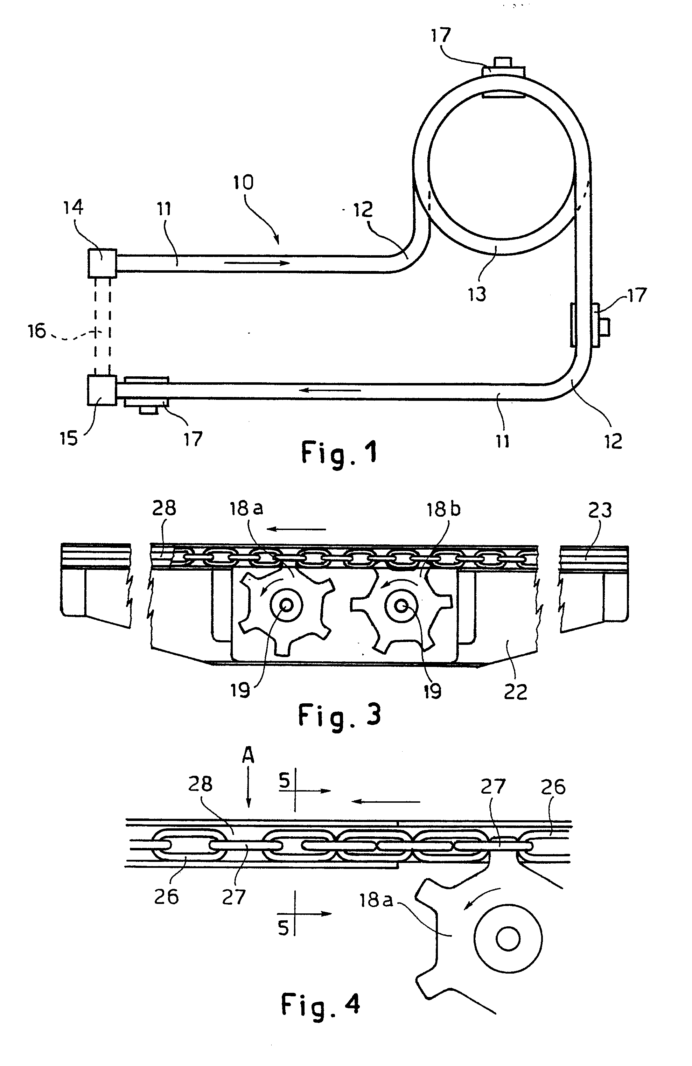

Figure 1 shows a generic conveyor 10 of the chains and cross bars type, which develops along a mixed path comprising, for example, rectilinear sections 11, connected with each other by curves 12 and/or circular sections 13, which can be developed on several planes, in a way per sé known. In such a conveyor. the conveying branch of the belt runs along appropriate lateral guides beginning, for example, from a goods loading point 14 and running to an unloading point 15, between which there is the return of the passive branch of the belt along a separate path indicated by 16. The driving of the conveyor belt along the goods conveying path, is provided by means of appropriate drive units 17 placed in pre-estabilshed positions along the path of the belt; each of these units 17 acts through sprocket wheels 18 to pull forward the chains of the section of belt comprised between each drive unit and the drive unit upstream or immediately preceding. The sprocket wheels 18, which are suitably shaped in order to adapte them to the links of the chain, are connected with each other by shafts 19 operated in synchronism by an electric motor 20 by means of transmission chains or belts 21.

The drive motor 20, the shafts with drive wheels 18 and the remaining parts or equipment of each drive unit, are carried by slide plates 22 which, according to the present invention, are provided with means for guiding the chains and the accumulation of the slackened links, so as to compensate for any slackening of the chain section downstream or following each drive unit. In fact, as shown in the drawings, the conveyor belt comprises two link chains 23 running in lateral guides 24 along the path of the conveyor, and cross bars 25 welded to the links of the chains so as to define the surface of the belt on which the goods to be conveyed rest. Each of the chains comprises interconnected chain links which, for the purposes of the present description, can be divided into main links members 26, which lie in vertical planes that are orthogonal to the conveying surface of the belt, and intermediate links members 27 arranged in parallel with the surface of the conveyor or in planes that are orthogonal to those of the preceding links.

As mentioned at the beginning, the causes that can determine a slackening of the chains during the use of the conveyor, are multiple and mainly they can be attributed to the dimensioning tolerances of the single chain links, to wear in the course of time of the links and the runner guides, particularly in the curves or circular sections, with a consequent variation of the lengths of the chains. Moreover, these causes may affect either the entire length of the belt or only specific sections along its course.

Therefore according to the present invention, each drive unit has been provided with means suitable for accumulating slackened links or excesses in the length of the chains, which may occur during the working of the conveyor so as to avoid jamming or a bad running of the belt, with consequent bad functioning of the conveyor. These accumulating means for the slackened chain links consist of a link accumulating channel 28 on the plates 22 of each side of the drive unit in correspondance with the exit end of the belt, where the chains 23, because of the pushing forward of the sprocket wheels 18, may eventually slacken, thus becoming weak or reducing the traction exerted at that point by the successive drive unit. In the case of non-reversible conveyors, the accumulating channels 28 for the slackened links are arranged preferably only at the exit end of the drive units, while for reversible conveyors, as shown, the accumulating channels for the links are arranged at both extremities of the drive unit.

Although the single links 26 and 27 of each chain 23 are rigidly connected to corresponding links of the other chain by the cross bars 25 and therefore are impeded from any shifting in the transverse sense relative to the belt, the chain links in the accumulating channels 28, being pushed forward one against the other, could get stuck or tend to rise or advance obliquely, thus causing a sloping position of the bars and the corresponding links of the conveyor belt, with possible jamming or bad functioning. According to the present invention, this inconvenience has been obviated by using link accumulating channels 28 in low friction material and providing them with appropriate running guide tracks for the main links and respectively for the intermediate links of each chain. In particular, as shown, each accumulating channel 28 comprises a bottom wall 29 and lateral walls 30 which, together with the bottom wall 29, define a first longitudinal track 31 along which the main links 26 run and are guided. The bottom wall 29 of each accumulating channel 28 also comprises a longitudinal slot 32 that defines a running and guide track for the intermediate links 27 of the chain; this track 32 is open towards the track 31.

Preferably the running and guide tracks 31 and 32 for the slackened links in each accumulating channel, are delimited by flat surfaces, arranged in orthogonal planes, which support and guide the single links of the chain on three sides, these links being impeded from moving towards the inside of the conveyor by the action of the cross bars 25.

The working of the drive unit provided with accumulating means for the slackened chain links, according to the present invention, comes about in the following way : assuming that the conveyor belt and therefore its lateral chains move in the direction of the arrows shown in Fig. 3 and Fig. 4, both the sprocket wheels 18a and 18b in Fig. 3 will pull the section of chain 23 in entrance to or upstream of a first drive unit 17, and at the same time the section of chain 23 which is advancing beyond said drive unit will be drawn in its turn by a successive drive unit 17. Therefore the chain that is entering each drive unit is always taut, being drawn by the sprocket wheel 18b. Nevertheless, in the case of a slackening of the chains occurring for the reasons explained above, this slackening would affect the tautness of the chain in exit from a drive unit since the sprocket wheel 18a would tend to push forward the chain link with which it is engaged at the moment, while the preceding link or several links immediately preceding in the same chain would tend to slow down because of the slackness in the chain itself. Nevertheless, these slackened links do not cause any difficulty in the functioning of the conveyor and do not impede the running of the belt, since they accumulate and push each other forward along the guide tracks 31 and 32 of the accumulating channel described above. The thrust forward of the spocket wheel 18a on the slackened chain links will be exerted up to a certain point of the accumulating channel, indicated by the arrow A, since after that point the successive drive unit 17 will begin to make itself felt. In this way the chains of the belt can run freely without any difficulty.

When the slackening of the chains has reached an excessive value, it is possible to intervene on the conveyor by shortening the belt by the quantity of links necessary to bring the chain 23 back to the correct operating tension for the conveyor.

## Claims

1. - A drive unit for endless chain conveyors having a belt comprising a first and a second slide chains said chains having respective links (26, 27) connected by means of cross bars (25) defining the conveying surface of the conveyor and in which each chain comprises main link members (26) arranged in planes that are orthogonal to said conveying surface, and intermediate link members (26) which are interconnected to the former one, said intermediate link members (27) being parallely arranged to said conveying surface, each drive unit (17) comprising sprocket wheels (18a, 18b) for advancing or drawing the chains, said wheels (18a, 18b) being connected to a suitable drive motor (20) characterized by the fact that on both sides of the drive unit, in correspondence with at least one end of the same, guide and link accumulating means (28) are provided for the slackened links of the chains, said accumulating means (28) comprising a sliding channel for the chains said channel (28) having a first guide track (31) for the main links (26) and a second guide track (32) for the intermediate links (27) of the chains.

2. - A drive unit as claimed in claim 1, characterized by the fact that the accumulating channel (28) comprises a bottom wall (32) and lateral walls (30) defining said guide track for the main links (26) of the chain, and a longitudinal slot (32) in the bottom wall (29), defining the guide track for the intermediate links (27).

3. - A drive unit as claimed in claim 2, characterized by the fact that the said guide tracks (31, 32) for the links (26, 27) are delimited by flat surfaces.

4. - A drive unit as claimed in one or more of the preceding claims, especially for reversible chain conveyors, characterized by the fact that the said link accumulating means (28) are arranged at both ends of the drive unit (17).

5. - A drive unit as claimed in any one of the preceding claims, characterized by the fact that said link accumulating channels (28) are provided with low friction material.

Fig. 1

Fig. 3

Fig. 4

Fig. 2

Fig. 5